# FASCICULE DE BREVET EUROPEEN

(11) **EP 0 921 546 B1**
(45) Date de publication et mention de la délivrance du brevet: **11.01.2006**
(21) Numéro de dépôt: 98410129.5
(22) Date de dépôt: 10.11.1998
(51) Int. Cl.: H01H 9/04, H02G 3/08

(54) **Dispositif de traverse, notamment pour boîtier d'équipement électrique**
Durchführungsvorrichtung, insbesondere für Gehäuse elektrischer Geräte
Lead-through device, particularly for casing of an electrical equipment

(30) Priorité: 02.12.1997 FR 9715503
(43) Date de publication de la demande: 09.06.1999
(73) Titulaire: SCHNEIDER ELECTRIC INDUSTRIES SAS, 92500 Rueil-Malmaison (FR)
(72) Inventeur: Wasner, Olivier, Schneider Electric - S.P.I., 38050 Grenoble cedex 09 (FR); Guinebert, Patrick, Schneider Electric - S.P.I., 38050 Grenoble cedex 09 (FR); Buchy, Bernard, Schneider Electric - S.P.I., 38050 Grenoble cedex 09 (FR); Goerger, Christophe, Schneider Electric - S.P.I., 38050 Grenoble cedex 09 (FR)
(74) Mandataire: Ritzenthaler, Jacques

(56) Documents cités:
- CH-A- 375 056
- DE-A- 2 240 086
- DE-A- 4 300 521
- DE-U- 8 600 635
- FR-A- 2 689 331

## Description

La présente invention concerne un dispositif de traversée notamment pour un boîtier ou une enveloppe d'un équipement électrique, ledit boîtier comprenant une embase et un couvercle, ladite embase comprenant une paroi de fond par laquelle ledit boîtier est destiné à être fixé sur une surface d'appui et des parois latérales, ledit dispositif comprenant un embout de fermeture susceptible d'être fixé de manière amovible et étanche dans une ouverture de forme conjuguée ménagée dans l'une des parois latérales du boîtier grâce à des moyens de fixation prévus en partie sur le boîtier et en partie sur l'embout, de manière à autoriser le passage étanche d'un élément de raccordement, notamment un conduit ou un câble.

On connaît un dispositif de traversée du genre précédemment mentionné tel que décrit dans le document FR 2.710.790 de la demanderesse. Ce dispositif est constitué par un embout comprenant un premier élément en forme de bague réalisé en un matériau rigide et un deuxième élément de traversée réalisé en un matériau souple, fixé à l'intérieur du premier élément en obturant complètement l'orifice délimité par la bague. Ce premier élément en matériau rigide comporte des moyens d'encliquetage destinés à coopérer avec les bords internes de l'ouvert du boîtier, pour assurer la fixation de l'embout dans ladite ouverture

On connaît également un dispositif de traversée décrit dans le brevet FR 2 689 331 comportant les caractéristiques décrites dans le préambule de la revendication 1. Ce dispositif comporte une virole placée dans l'ouverture de la paroi à équiper et coopérant avec une cape, ladite cape comportant des pattes d'encliquetage réparties le long de sa circonférence extérieure et destinées à coopérer avec des encoches prévues sur la circonférence de l'ouverture de la paroi précitée, et avec la virole précitée.

Or, les boîtiers d'équipements électriques sont destinés à être fixés sur une surface d'appui telle un mur au moyen de vis de fixation traversant leur paroi de fond. Les boîtier équipés d'entrées telles que décrites précédemment présentent l'inconvénient d'être déformés pendant l'opération de fixation. Il en résulte une altération de l'étanchéité de l'ensemble.

La présente invention résout ces problèmes et propose un dispositif de traversée pour boîtier d'équipement électrique, de conception simple, et permettant d'obtenir une étanchéité garantie de l'ensemble boîtier et entrées, ainsi qu'un boîtier équipé d'une telle entrée.

A cet effet, la présente invention a pour objet un dispositif de traversée, ce dispositif étant caractérisé en ce que les moyens de fixation précités comprennent au moins une patte (ou coulisse) appartenant à l'embout apte à coopérer à coulissement avec au moins une coulisse (ou respectivement, patte) appartenant au boîtier B, (la)lesdites patte(s) et coulisse(s) s'étendant sensiblement perpendiculairement à la paroi de fond dudit boîtier et la (lesdites) patte(s) coulissant dans la(les) coulisse(s) suivant une direction également sensiblement perpendiculaire à la paroi de fond, de manière à rigidifier ledit boîtier notamment pendant sa fixation sur la surface d'appui précitée.
Les pattes ainsi fixées dans les coulisses de l'embase ramènent le boîtier dans son état initial après l'opération de fixation.

Selon une réalisation particulière, les pattes (ou coulisses) sont au nombre de deux et sont situées de part et d'autre d'un plan sensiblement perpendiculaire à la surface d'appui précitée et passant par l'axe dudit embout.

L'invention a également pour objet un boîtier comportant au moins un orifice destiné à recevoir une entrée conforme à l'invention.

Mais d'autres avantages et caractéristiques de l'invention apparaîtront mieux dans la description détaillée qui suit et se réfère aux dessins annexés donnés uniquement à titre d'exemple et dans lesquels :
- la figure 1 est une vue en perspective illustrant un boîtier d'appareillage électrique ouvert, équipé d'un dispositif de traversée (ou embout), conforme à une réalisation particulière de l'invention,
- la figure 2 est une vue en perspective du dispositif de traversée vu côté intérieur,
- la figure 3 est une vue en coupe du boîtier, suivant un plan parallèle à sa paroi de fond,
- la figure 4 est une vue en coupe du boîtier suivant un plan longitudinal médian perpendiculaire à sa paroi de fond,
- la figure 5 est une vue partielle d'un dispositif de traversée, conforme à une autre réalisation de l'invention, et
- la figure 6 illustre en perspective l'entrée de câble de l'invention, vue de l'extérieur.

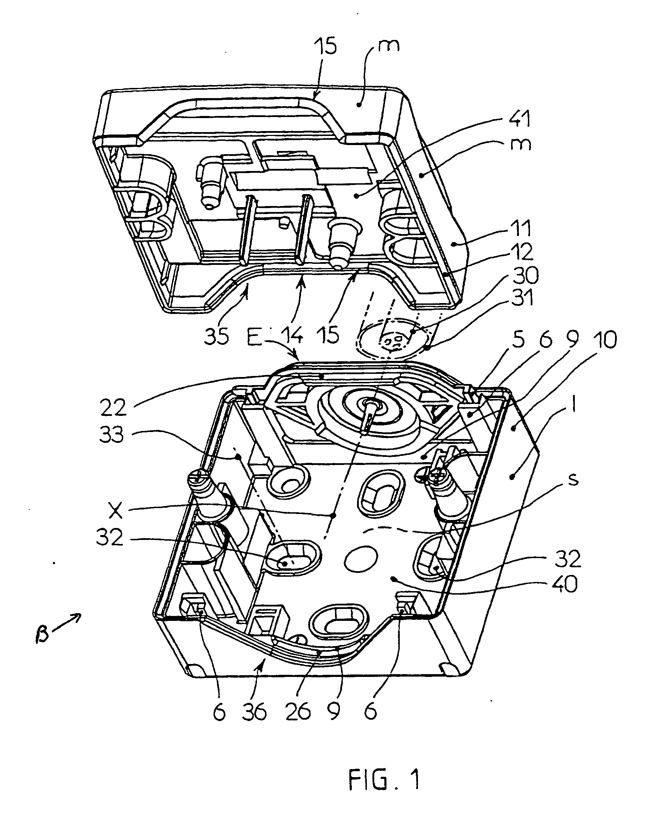

Sur la figure 1, on voit un boîtier B d'appareillage électrique constitué principalement par une embase 10 destinée à recevoir l'appareillage, un couvercle 11 et deux dispositifs de traversée (ou embouts E) (dont seul l'un est représenté sur cette figure). L'embase 10 comporte d'une part une paroi de fond 40 comportant des orifices 32 par lesquels ladite paroi 40 est destinée à être fixée au moyen de vis 33 sur une surface d'appui (s) telle un mur, et d'autre part des parois latérales 1. Deux de ces parois latérales 1, opposées l'une par rapport à l'autre, présentent des semi-ouvertures 36 sensiblement en forme de V destinées à recevoir la partie inférieure desdites entrées de câble ou embout E. Le couvercle 11 est constitué par une paroi supérieure 41 et des parois latérales m, dont deux présentent une semi-ouverture 35 sensiblement en forme de V destinée à recevoir la partie supérieure de l'une des entrées de câble E.

Ainsi, l'embout est logé en partie dans l'embase 10 et en partie dans le couvercle 11, ce qui permet d'obtenir une hauteur de boîtier B faible, tout en facilitant le montage et l'accès aux composants dans le boîtier B.

La forme de l'ouverture 35, 36 du boîtier facilite le raccordement des câbles aux composants et l'accès aux bornes de raccordement.

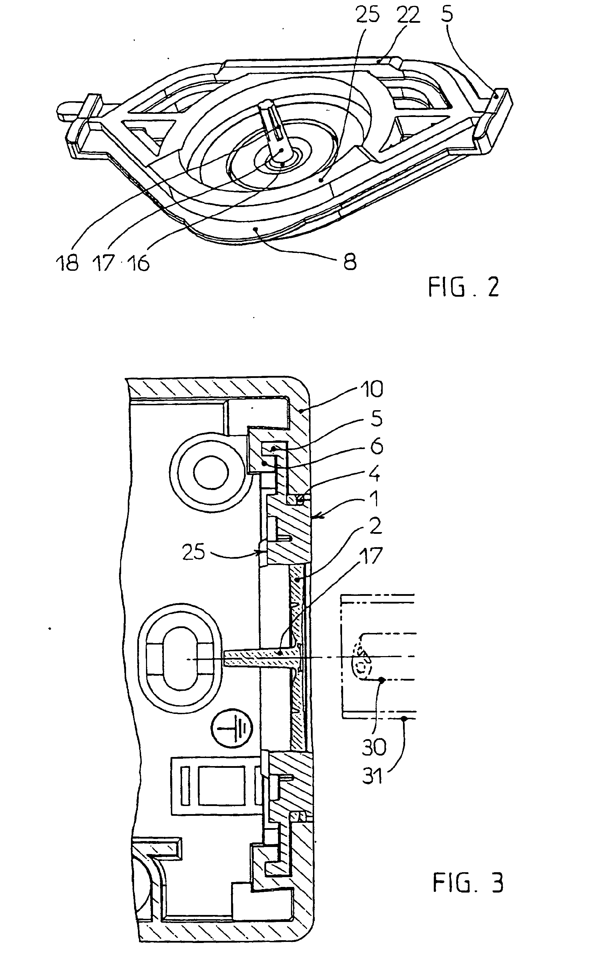

Comme on le voit plus particulièrement sur les figures 2, 3 et 6, l'entrée de câble E conforme à l'invention est constituée par une partie rigide 1 (par exemple en thermoplastique rigide) dont le contour extérieur prend sensiblement la forme de 2V inversés, et comportant un orifice central obturé par une membrane souple 2 (par exemple en thermoplastique souple), rigidement fixée à une surface intérieure de la partie rigide 1. Cette partie rigide 1 comporte également, à ses deux extrémités opposées, deux pattes 5 dites de fixation, destinées à coopérer à coulissement avec deux coulisses 6 formées sur la surface intérieure de la paroi de l'embase 10 destinée à recevoir l'entrée E, et forment ainsi avec les coulisses 6 des moyens de fixation de l'entrée de câble dans le boîtier B. On voit que ces pattes 5 sont disposées de part et d'autre d'un plan sensiblement perpendiculaire à la surface d'appui (s) (ou paroi de fond 40) et passant par d'axe X de l'ouverture dudit embout E.

A ces moyens de fixation sont associés des moyens de verrouillage comprenant des moyens d'encliquetage ou clips (non représentés) prévus en partie sur les pattes 5 et en partie dans les coulisses 6.

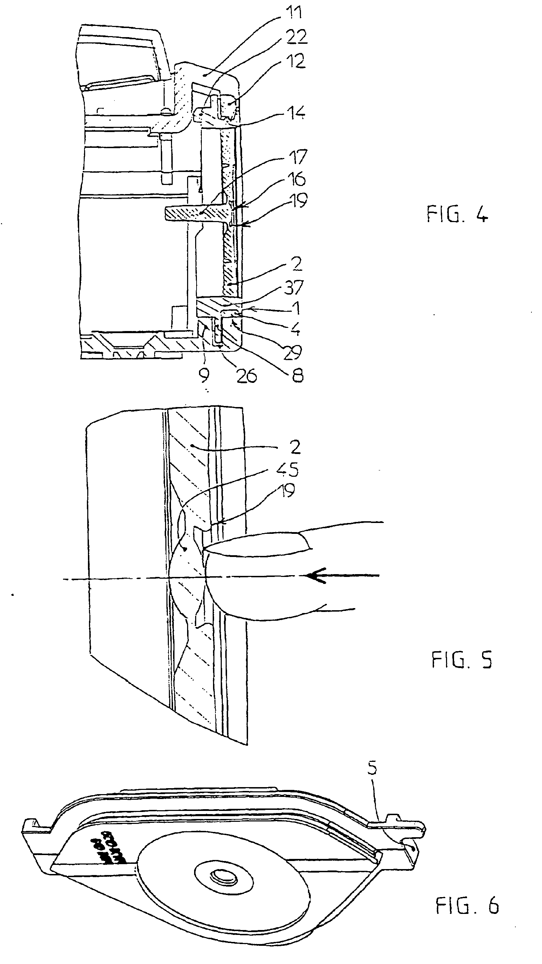

Comme on le voit en outre sur la figure 4, l'embout E comporte sur sa face intérieure, au niveau de sa partie rigide, une nervure 22 conformée de manière à permettre sa préhension.

On voit également que l'élément de traversée souple 2 comporte une tétine 17 destinée à être arrachée manuellement ou à l'aide d'un outil de manière à libérer un orifice destiné à recevoir un conduit ou un câble 30, 31.

On notera qu'avantageusement cette tétine 17 comporte des rainures 18 s'étendant parallèlement à sa direction longitudinale et destinées à faciliter sa préhension.

De même, cette tétine 17 comporte à la base, un renforcement 16 en retrait par rapport à la lèvre 19 et formé de manière à ce que le déchirement localisé au niveau de la paroi 20, ne détériore pas la lèvre 19 qui réalise l'étanchéité en liaison avec le conduit 30, 31.

Comme on le voit plus particulièrement sur les figures 2 et 4, l'embout précité (E) comporte le long de sa partie inférieure, une collerette 37 apte à venir se loger dans une rainure 26 de l'embase 10 et destinée à contraindre les efforts d'engagement et de retrait du conduit 30,31.

Cette collerette 37 est prolongée par une languette 8 apte à être reçue dans la rainure précitée 26 et destinée à guider l'embout (E) lors de son montage dans l'embase (E).

Comme plus particulièrement visible sur la figure 4, l'embout (E) comporte à sa partie inférieure, un joint d'étanchéité 4 coopérant avec une nervure 29 de l'embase 10 de manière à réaliser l'étanchéité entre les deux pièces.

De même, l'embout comporte à sa partie supérieure une nervure 14 coopérant avec un joint 12 prévu sur le couvercle 11, de manière à réaliser l'étanchéité entre l'embout (E) et le couvercle 11. Ainsi, la nervure 14 sur l'entrée déforme le joint 12 du couvercle 11 suivant une génératrice circulaire. Il est ainsi possible d'obtenir un joint continu sur le couvercle.

On voit également que l'embout (E) comporte un bossage 25 apte à venir buter sur une nervure 9 de l'embase 10, de manière à limiter l'écrasement du joint 4.

La mise en place des dispositifs de traversée s'effectue en introduisant les pattes 5 des entrées E dans les coulisses 6 de l'embase E jusqu'à ce que l'encliquetage soit réalisé. Puis, le couvercle 11 est fixé sur l'embase 10. L'introduction du câble ou conduit 30, 31 à l'intérieur du boîtier B s'effectue après que l'on ait exercé une traction sur la tétine 17 de l'élément de traversée 2 manuellement ou à l'aide d'un outil. On notera que dans la réalisation illustrée sur la figure 5, l'élément souple 2 ne comportant pas de tétine, une simple poussée exercée avec le pouce sur la partie centrale 45 suffira a provoquer la libération de l'orifice. Lors de la mise en oeuvre d'un conduit rigide, l'entrée pourra être soulevée et glissée le long de ce conduit, le boîtier et le tube étant fixés sur leur support. Il suffit en effet de soulever l'entrée de quelques millimètres seulement (évitant ainsi son démontage) pour pouvoir la glisser le long du conduit, ce qui facilite le raccordement des mécanismes se trouvant dans le boîtier. Après quoi, l'entrée est replacée dans l'ouverture du boîtier.

Il est bien entendu que la forme de l'embout peut être différente, par exemple quadrangulaire. Ce dispositif permet d'assurer une entrée étanche de câble, d'un conduit, d'un presse-étoupe ou d'un tube quelconque dans le boîtier. L'entrée et le boîtier forment un système rigide et étanche.

Un tel dispositif de traversée étanche est utilisable par exemple dans les boîtes de dérivation, les coffrets, les enveloppes, les plaques de raccordement d'armoires électriques.

## Revendications

1. Boîtier d'un équipement électrique, comprenant une embase (10) et un couvercle (11), ladite embase (10) comprenant une paroi de fond (40) par laquelle ledit boîtier(B) est destiné à être fixé sur une surface d'appui (s) et des parois latérales (1,m), ledit boîtier (B) comprenant un embout de fermeture (E) susceptible d'être fixé de manière amovible et étanche dans une ouverture (35,36) de forme conjuguée ménagée dans l'une des parois latérales (1,m) du boîtier (B) grâce à des moyens de fixation prévus en partie sur le boîtier (B) et en partie sur l'embout (E), de manière à autoriser le passage étanche d'un élément de raccordement, notamment un conduit ou un câble, les moyens de fixation comprenant des moyens de verrouillage de l'embout E sur le boîtier(B),
**caractérisé en ce que** les moyens de fixation précités comprennent au moins une patte (5) ou coulisse (6) appartenant à l'embout apte à coopérer à coulissement avec au moins une coulisse (6) ou respectivement, patte (5) appartenant au boîtier (B) (la)lesdites patte(s) et coulisse(s) s'étendant sensiblement perpendiculairement à la paroi de fond (40) dudit boîtier (B) et la (lesdites) patte(s) coulissant dans la(les) coulisse(s) suivant une direction également sensiblement perpendiculaire à la paroi de fond, de manière à rigidifier ledit boîtier notamment pendant sa fixation sur la surface d'appui précitée.

2. - Boitier selon la revendication 1, **caractérisé en ce que** les pattes (5) (ou coulisses (6)) sont au nombre de deux et sont situés de part et d'autre d'un plan sensiblement perpendiculaire à la surface d'appui précitée (s) et passant par l'axe X dudit embout (E).

3. - Boîtier selon la revendication 2, **caractérisé en ce que** les pattes (5) et coulisses (6) sont situées respectivement aux deux extrémités de l'embout (E).

4. - Boîtier selon l'une quelconque des revendication précédentes, **caractérisé en ce que** les parties inférieure et supérieure de l'embout E présentent chacune un contour extérieur sensiblement en forme de V, et sont adaptées pour être reçues respectivement dans des semi-ouvertures (36, 35) de forme correspondante de l'embase (10) et du couvercle (11).

5. - Boîtier selon l'une quelconque des revendications précédentes, **caractérisé en ce que** l'embout précité (E) comporte sur sa face intérieure une nervure (22) conformée de manière à permettre sa préhension.

6. - Boîtier selon l'une quelconque des revendications précédentes, **caractérisé en ce que** les moyens de verrouillage comprennent des moyens d'encliquetage prévus en partie sur les pattes (5) et en partie dans les coulisses (6).

7. - Boîtier selon l'une quelconque des revendications précédentes, **caractérisé en ce que** ledit embout (E) comprend une partie rigide (1) supportant les moyens de fixation précités et un élément souple de traversée (2) disposé à l'intérieur de la première partie (1) en étant fixée rigidement à une surface intérieure de celle-ci.

8. - Boîtier selon la revendication 7, **caractérisé en ce que** l'élément de traversée précitée (2) comporte une tétine (17) destinée à être arrachée manuellement ou à l'aide d'un outil, de manière à libérer un orifice destiné à recevoir un conduit (30, 31).

9. - Boîtier selon la revendication 8, **caractérisé en ce que** la tétine précitée (3) comporte des rainures (18) s'étendant parallèlement à sa direction longitudinale et destinées à faciliter sa préhension.

10. - Boîtier selon la revendication 8 ou 9, **caractérisé en ce que** la tétine (17) comporte à sa base un renforcement (16) en retrait vers l'intérieur du boitier (B) par rapport à une lèvre (19) destinée à réaliser l'étanchéité entre l'embout (E) et le conduit (30, 31), afin que le déchirement de la tétine (17) ne détériore pas la lèvre (19).

11. - Boîtier selon l'une quelconque des revendications précédentes, **caractérisé en ce que** l'embout précité (E) comporte le long de sa partie intérieure, une collerette (37) apte à venir se loger dans une rainure (26) de l'embase (10) et destinée à contraindre les efforts d'engagement et de retrait du conduit (30, 31).

12. - Boîtier selon la revendication 11, **caractérisé en ce que** la collerette (37) est prolongée par une languette (8) apte à être reçue dans la rainure précitée (26) et destinée à guider l'embout (E) lors de son montage dans l'embase (E).

13. - Boîtier selon l'une quelconque des revendications précédentes, **caractérisé en ce que** l'embout (E) comporte à sa partie inférieure, un joint d'étanchéité (4) coopérant avec une nervure (29) de l'embase (10) de manière à réaliser l'étanchéité entre les deux pièces.

14. - Boîtier selon l'une quelconque des revendications précédentes, **caractérisé en ce que** l'embout (E) comporte à sa partie supérieure une nervure (14) coopérant avec un joint (12) prévu sur le couvercle (11), de manière à réaliser l'étanchéité entre l'embout (E) et le couvercle (11).

15. - Boîtier selon la revendication 13 ou 14, **caractérisé en ce que** l'embout (E) comporte un bossage (25) apte à venir buter sur une nervure (9) de l'embase (10), de manière à limiter l'écrasement du joint (4).

## Patentansprüche

1. Elektrogehäuse mit einem Unterteil (10) und einem Deckel (11), welches Unterteil (10) eine Bodenwand (40), die dazu dient, das Gehäuse (B) auf einer Stützunterlage (s) zu befestigen, sowie Seitenwände (1, m) umfasst, wobei das Gehäuse (B) einen Verschlusseinsatz (E) umfasst, der dazu dient, mit Hilfe von Befestigungsmitteln, die teilweise am Gehäuse (B) und teilweise am Einsatz (E) ausgebildet sind, lösbar und dicht in einer Öffnung (35, 36) angepasster Form, die in einer der Seitenwände (1, m) des Gehäuses (B) ausgebildet ist, so befestigt zu werden, dass ein Anschlusselement, insbesondere eine Leitung oder ein Kabel dicht hindurchgeführt werden können, wobei die Befestigungsmittel Verriegelungsmittel zur Verriegelung des Einsatzes E im Gehäuse (B) umfassen,
**dadurch gekennzeichnet, dass** die genannten Befestigungsmittel mindestens eine am Einsatz ausgebildete Nase (5) bzw. Gleitführung (6) aufweisen, die dazu dient, mit mindestens einer am Gehäuse B ausgebildeten Gleitführung (6) bzw. Nase (5) zusammenzuwirken, wobei die genannte(n) Nase(n) und Gleitführung(en) annähernd senkrecht zur Bodenwand (40) des genannten Gehäuses (B) angeordnet sind und die genannte(n) Nase(n) in der Gleitführung/den Gleitführungen in einer Richtung gleiten, die ebenfalls annähernd senkrecht zur Bodenwand verläuft, derart dass das genannte Gehäuse insbesondere während seiner Befestigung auf der genannten Stützunterlage versteift wird.

2. Gehäuse nach Anspruch 1, **dadurch gekennzeichnet, dass** jeweils zwei Nasen (5) bzw. Gleitführungen (6) vorhanden sind, die auf beiden Seiten einer annähernd senkrecht zur genannten Stützfläche (s) liegenden Ebene angeordnet sind und durch die Achse X des genannten Einsatzes (E) verlaufen.

3. Gehäuse nach Anspruch 2, **dadurch gekennzeichnet, dass** die Nasen (5) und Gleitführungen (6) an den beiden Enden des Einsatzes (E) angeordnet sind.

4. Gehäuse nach irgendeinem der vorhergehenden Ansprüche, **dadurch gekennzeichnet, dass** die Unterseite und die Oberseite des Einsatzes (E) jeweils eine annähernd V-förmige Außenkontur aufweisen und dazu dienen, von entsprechend geformten Halböffnungen (36, 35) des Unterteils (10) bzw. des Deckels (11) aufgenommen zu werden.

5. Gehäuse nach irgendeinem der vorhergehenden Ansprüche, **dadurch gekennzeichnet, dass** an der Innenseite des genannten Einsatzes (E) eine Rippe (22) ausgebildet ist, die so geformt ist, dass sie als Griffstück des Einsatzes dienen kann.

6. Gehäuse nach irgendeinem der vorhergehenden Ansprüche, **dadurch gekennzeichnet, dass** die Verriegelungsmittel Schnappmittel umfassen, die teilweise an den Nasen (5) und teilweise an den Gleitführungen (6) ausgebildet sind.

7. Gehäuse nach irgendeinem der vorhergehenden Ansprüche, **dadurch gekennzeichnet, dass** der genannte Einsatz (E) einen, die genannten Befestigungsmittel tragenden biegesteifen Abschnitt (1) sowie ein biegsames Durchführungselement (2) umfasst, das im Inneren des ersten Abschnitts (1) angeordnet und dabei starr an einer Innenseite dieses Abschnitts befestigt ist.

8. Gehäuse nach Anspruch 7, **dadurch gekennzeichnet, dass** das genannte Durchführungselement (2) eine Tülle (17) umfasst, die dazu dient, von Hand oder mit einem geeigneten Werkzeug herausgebrochen zu werden, um so eine Öffnung freizulegen, die zur Durchführung einer Leitung (30, 31) dient.

9. Gehäuse nach Anspruch 8, **dadurch gekennzeichnet, dass** die genannte Tülle (17) Nuten (18) aufweist, die parallel zur Längsrichtung der Tülle verlaufen und dazu dienen, das Teil leichter greifen zu können.

10. Gehäuse nach Anspruch 8 oder 9, **dadurch gekennzeichnet, dass** die Tülle (17) an ihrem Fußende eine Verstärkung (16) aufweist, die in Bezug zur einer Lippe (19), welche dazu dient, die Dichtigkeit zwischen dem Einsatz (E) und der Leitung (30, 31) zu gewährleisten, in Richtung der Innenseite des Gehäuses (B) zurückversetzt ist, damit beim Herausbrechen der Tülle (17) die Lippe (19) nicht beschädigt wird.

11. Gehäuse nach irgendeinem der vorhergehenden Ansprüche, **dadurch gekennzeichnet, dass** am genannten Einsatz (E) längs seiner Unterseite ein Kragen (37) ausgebildet ist, der in eine Nut (26) des Unterteils (10) eingreifen kann und dazu dient, die Einschub- und Auszugskräfte der Leitung (30, 31) aufzufangen.

12. Gehäuse nach Anspruch 11, **dadurch gekennzeichnet, dass** der Kragen (37) durch eine Zunge (8) verlängert ist, die in die genannte Nut (26) eingreifen kann und dazu dient, den Einsatz (E) bei dessen Montage im Unterteil (E) zu führen.

13. Gehäuse nach irgendeinem der vorhergehenden Ansprüche, **dadurch gekennzeichnet, dass** der Einsatz (E) an seiner Unterseite eine Dichtung (4) umfasst, die mit einer Rippe (29) des Unterteils (10) so zusammenwirkt, dass die Dichtigkeit zwischen den beiden Teilen gewährleistet wird.

14. Gehäuse nach irgendeinem der vorhergehenden Ansprüche, **dadurch gekennzeichnet, dass** der Einsatz (E) an seiner Oberseite eine Rippe (14) aufweist, die mit einer im Deckel (11) ausgebildeten Dichtung (12) so zusammenwirkt, dass die Dichtigkeit zwischen dem Einsatz (E) und dem Deckel (11) gewährleistet wird.

15. Gehäuse nach Anspruch 13 oder 14, **dadurch gekennzeichnet, dass** am Einsatz (E) eine Wulst (25) ausgebildet ist, die in Anlage gegen eine Rippe (9) des Unterteils (10) gelangen kann, um so die Stauchung der Dichtung (4) zu begrenzen.

## Claims

1. Electrical equipment case comprising a base (10) and a cover (11), said base (10) comprising a rear panel (40) by means whereof said case (B) is designed to be fixed onto a support surface (s) and side panels (l, m), said case (B) comprising a closing end-part (E) able to be fixed in removable and tight manner in an opening (35, 36) of conjugate shape arranged in one of the side panels (l, m) of the case (B) by means of fixing means provided partly on the case (B) and partly on the end-part (E) so as to enable tight passage of a connecting part, in particular a duct or cable, the fixing means comprising latching means for securing the end-part (E) onto the case (B),
**characterized in that** the above-mentioned fixing means comprise at least one lug (5) or slide (6) belonging to the end-part designed to co-operate slidingly with at least one slide (6) or respectively lug (5) belonging to the case (B), said lug(s) and slide(s) extending substantially perpendicularly to the rear panel (40) of said case (B) and said lug(s) sliding in the slide(s) in a direction also substantially perpendicular to the rear panel, so as to rigidify said case in particular during fixing thereof onto the above-mentioned support surface.

2. Case according to claim 1, **characterized in that** the lugs (5) (or slides (6)) are two in number and are located on each side of a plane substantially perpendicular to the above-mentioned support surface (s) and passing through the axis X of said end-part (E).

3. Case according to claim 2, **characterized in that** the lugs (5) and slides (6) are located respectively at the two ends of the end-part (E).

4. Case according to any one of the foregoing claims, **characterized in that** the bottom and top parts of the end-part (E) each present a substantially V-shaped outline and are adapted to be received respectively in half-openings (36, 35) of corresponding shape of the base (10) and cover (11).

5. Case according to any one of the foregoing claims, **characterized in that** the above-mentioned end-part (E) comprises on its inside face a rib (22) shaped in such a way as to enable gripping thereof.

6. Case according to any one of the foregoing claims, **characterized in that** the latching means comprise clipping means provided partly on the lugs (5) and partly in the slides (6).

7. Case according to any one of the foregoing claims, **characterized in that** said end-part (E) comprises a rigid part (1) supporting the above-mentioned fixing means and a flexible bushing element (2) arranged inside the first part (1) and rigidly fixed to an internal surface of the latter.

8. Case according to claim 7, **characterized in that** the above-mentioned bushing element (2) comprises a pin (17) designed to be torn off manually or by means of a tool so as to free an a hole designed to receive a duct (30, 31).

9. Case according to claim 8, **characterized in that** the above-mentioned pin (17) comprises grooves (18) extending in a direction parallel to its longitudinal direction and designed to facilitate gripping thereof.

10. Case according to claim 8 or 9, **characterized in that** the pin (17) comprises at its base a recess (16) set back towards the inside of the case (B) with respect to a lip (19) designed to achieve tightness between the end-part (E) and the duct (30, 31) so that tearing of the pin (17) does not damage the lip (19).

11. Case according to any one of the foregoing claims, **characterized in that** the above-mentioned end-part (E) comprises a rim (37) along the bottom part thereof designed to be housed in a groove (26) of the base (10) and having the purpose of constraining the engagement and withdrawal forces of the duct (30, 31).

12. Case according to claim 11, **characterized in that** the rim (37) is extended by a tab (8) able to be received in the above-mentioned groove (26) and designed to guide the end-part (E) when the latter is fitted in the base (10).

13. Case according to any one of the foregoing claims, **characterized in that** the end-part (E) comprises a seal (4) at its bottom part operating in conjunction with a rib (29) of the base (10) so as to achieve tightness between the two parts.

14. Case according to any one of the foregoing claims, **characterized in that** the end-part (E) comprises a rib (14) at its top part operating in conjunction with a seal (12) provided on the cover (11) so as to achieve tightness between the end-part (E) and cover (11).

15. Case according to claim 13 or 14, **characterized in that** the end-part (E) comprises a boss (25) designed to come up against a stop formed by a rib (9) of the base (10) so as to limit crushing of the seal (4).
